# EUROPEAN PATENT SPECIFICATION

(11) **EP 2 056 668 B1**
(45) Date of publication and mention of the grant of the patent: **15.12.2010**
(21) Application number: 07747300.7
(22) Date of filing: 04.05.2007
(51) Int. Cl.: A01J 5/04, A01J 7/04

(54) **MILKING CLAW DEVICE**
MILCHSAMMELSTÜCK
GRIFFE TRAYEUSE

(30) Priority: 04.05.2006 NL 1031749
(43) Date of publication of application: 13.05.2009
(73) Proprietor: Dietrich, Jacob Hendrik Berthold, 7213 TE Gorssel (NL)
(72) Inventor: DIETRICH, Berthold Johannes Theodorus, 7213 XM Gorssel (NL)
(74) Representative: Geurts, Franciscus Antonius
(86) International application number: PCT/NL2007/000118
(87) International publication number: WO 2007/129884

(56) References cited:
- WO-A-02/23976
- WO-A-99/66787
- WO-A-2005/043986
- GB-A- 2 191 076

## Description

### BACKGROUND OF THE INVENTION

The invention relates to a milking claw device, provided with connections for allowing cleansing agent through to the teat cups.

A milking claw device according to the preamble of claim 1 is known from GB-A-2.191.076.

Milking claw devices are generally known. They form a collection chamber for milk coming from the teats of a cow and are connected to a discharge line to a central milk storage. The milking claw device has been provided with four milk tubes on which teat cups have been arranged. Provisions for the usually pneumatic operation of the teat cups may have been arranged on the milking claw device. Provisions for supplying cleansing agent, such as iodine, and subsequently rinsing fluid, such as water and air, to the teat cups or to the connection thereof to the milk tubes in question, may have furthermore been arranged. Such an arrangement is known from WO 99/66787, WO 02/23976 and WO 2005/043986.

After milking a cow cleansing fluid or disinfectant is discharged to the teats in the teat cups. This may take place via a supply line which leads from a pressurised air source to an upper part of the milking claw housing and in the milking claw housing is connected via lines with four further lines leading to the teat cups. A discharge unit for iodine has been arranged on the pressurised air line. The supply line is usually kept closed by a valve in the upper part of the milking claw housing. When the discharge of cleansing agent to the teat cups is wanted, the valve is opened so that the iodine-containing pressurised air is able to flow via the further lines to the teat cups and the teats. The valve is subsequently closed again and the teat cups can be removed from the teats. The teat cups can then be rinsed.

It may occur that the valve in the upper part of the milking claw housing fails, and then remains in a fully or partially opened position. The result is that the iodine-containing air flow is kept intact, and iodine is continued to be discharged to the teat cups. This may continue during rinsing, which is not objectionable but for the waste of iodine. More objectionable is that the flow of iodine-containing air also continues during the next milking course. The in that case - inadvertently- discharged iodine then ends up in the milk coming from the teats and is thus passed via milk tubes to the collection chamber into the milking claw housing and from there to the central milk storage. Large quantities of milk may thus get contaminated by iodine.

### SUMMARY OF THE INVENTION

It is an object of the invention to improve on this.

It is an object of the invention to provide a device of the type mentioned in the preamble, with which iodine can be prevented from ending up in an unwonted manner and at unwanted moments in the teat cups or the milk lines connected thereto. At least one of these objects is according to the invention achieved with a milking claw device for a milking device, as described in claim 1.

When the first valve inadvertently cannot be fully brought back to a closed position following the discharge of the cleansing agent, the cleansing agent with pressurised fluid flowing along the first valve will be able to deflect through the third passage and not through the second connections to the teat cups or milk lines connected thereto.

In a simple embodiment the first valve has been arranged for closing off the first passage.

The deflection of the cleansing agent-containing fluid is enhanced when the third passage ends freely in the atmosphere. The fluid will follow the path of least resistance, not via the lines to the teat cups which lines have usually been provided with a non-return valve that has a threshold pressure.

In an as regards structure simple embodiment, the second passages and the third passage connect to the first passage at a communal location, wherein the third passage preferably is in line with the first passage.

In a further development of the milking claw device according to the invention it has been provided with a second valve for closing off the third passage. In that way the third passage can be closed off for the period that the discharge of the cleansing agent-containing fluid is indeed wanted. The effect of the second valve is enhanced when the second valve is biassed to a position that keeps the third passage open.

For operating the second valve the milking claw device may have been provided with a third connection for a pressurised fluid to a fourth passage for by means of pressurised fluid operating the second valve.

In one embodiment the second valve comprises a pin with a free end for closing off the third passage, wherein the pin is movable between a closed-off position and an opening position in a direction transverse or diagonal to the first and/or third passage.

Discharging the cleansing agent-containing fluid is enhanced when the third passage has been placed for during use being horizontal or oriented so as to slope down in flow direction.

In a compact embodiment the said connections and passages are housed in an upper part of the milking claw housing. When the upper part is removably attached to the milking claw housing, it may, as a component part, replace an existing standard upper part of a milking claw housing and thus cost-effectively add the provision according to the invention thereto.

In one embodiment the upper part has an upper wall and a side wall sloping down diagonally or transversely therefrom, wherein the second valve is accessible via a cap in the downwardly sloping side wall. The diagonally sloping side wall may be less susceptible to the collection and accumulation of falling dirt than the upper wall is, as a result of which the cap can remain accessible and passable, for instance to clean the second valve internally.

From a further aspect the invention provides such an upper part for a milking claw housing according to the invention.

From a further aspect the invention provides a milking claw device according to the invention, provided with teat cups and milk tubes that form the connection between the first connections and the teat cups.

From a further aspect the invention provides a milking installation provided with a number of milking claw devices according to the invention and a central milk storage connected to the milk discharge lines thereof.

The aspects and measures described in this description and claims of the application and/or shown in the drawings of this application may where possible also be used individually. Said individual aspects and other aspects may be the subject of divisional patent applications relating thereto. This particularly applies to the measures and aspects that have been described per se in the sub claims.

### SHORT DESCRIPTION OF THE DRAWINGS

The invention will be elucidated below on the basis of an exemplary embodiment shown in the attached drawings, in which:
Figure 1 shows a view of an exemplary embodiment of a milking claw device according to the invention;
Figure 2 shows a schematic, partial cross-section of the upper part of the milking claw device of figure 1;
Figure 3 shows the milking claw device of figures 1 and 2, in a first stage of use;
Figure 4 shows the milking claw device of figures 1 and 2, in a next stage of use; and
Figure 5 shows a schematic partial cross-section of an alternative upper part for the milking claw device of figure 1, having an adjusted interior.

### DETAILED DESCRIPTION OF THE DRAWINGS

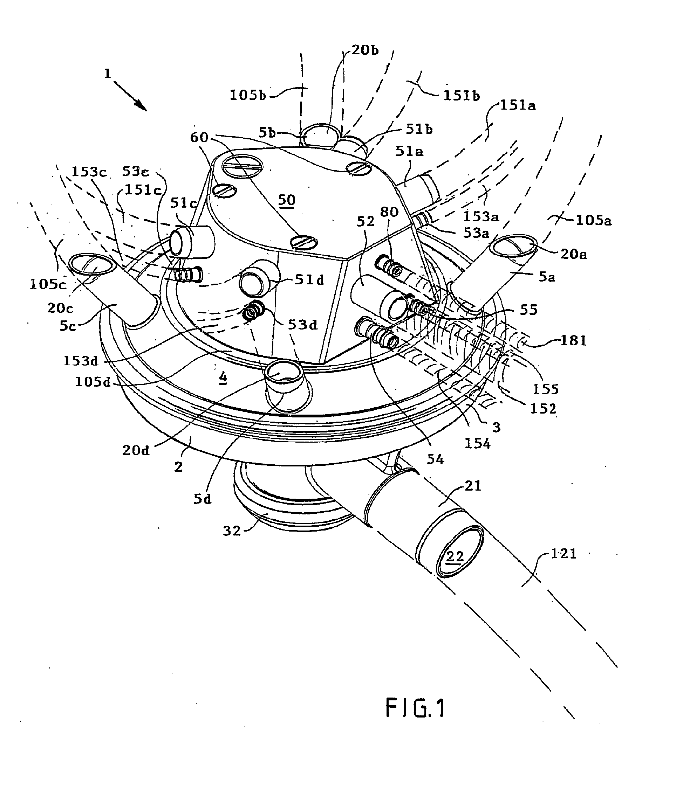

The milking claw device 1 according to a first embodiment as shown in figures 1-4 comprises a milking claw housing 2, having an inside 23 defined by a bowl-shaped wall 3 provided with an upper circumferential edge 24, and a lid 4 provided with a pending circumferential edge 25 placed airtight on the upper edge of the bowl 3. A spout 21 has been integrally formed in the bottom area of the bowl 3, which spout defines a passage 22. A schematically shown milk discharge line 121 can be connected to the spout 21.

The lid 4 has been provided with four spouts 5a-d forming passages 20a-d to the inside 23 of the milking claw housing 2, and to which the milk tubes 105a-d schematically shown in figure 1 can be connected. Said milk tubes 105a-d have been connected to teat cups that have not been shown and receive the milk therefrom.

By means of screws 60 an upper part 50 is detachably attached to the lid 4, which part 50 with the lid 4 can form a replaceable unit, which may for instance replace a conventional lid unit placed on the bowl 3.

The upper part 50 substantially serves as connection and passage of several operation lines and operation fluid, respectively. In this example spouts 51 a-d for vacuum lines 151 a-d to the teat cups can be seen, in order to move the liners of the teat cups, in a manner known per se for milking. Inside the upper part 50, the spouts 51 a-d are in connection with a spout 52 to which a vacuum/air line 152 has been connected, leading to a vacuum source that is not shown.

Immediately below the spouts 51a-d the upper part has been provided with spouts 53a-d, to which tubes 153a-d have been connected leading to the teat cups in question or parts of the milk tubes 105a-d connecting thereto, in order to allow cleansing agent with pressurised air and/or water/pressurised air mixture to be passed thereto. Inside the upper part 50, the spouts 53a-d are in connection with a passage 56 via four upwardly inclined ducts 59a-d, which passage 56 is in line with a spout 54, to which a tube 154 is connected that is in connection with a water/air source that is not shown.

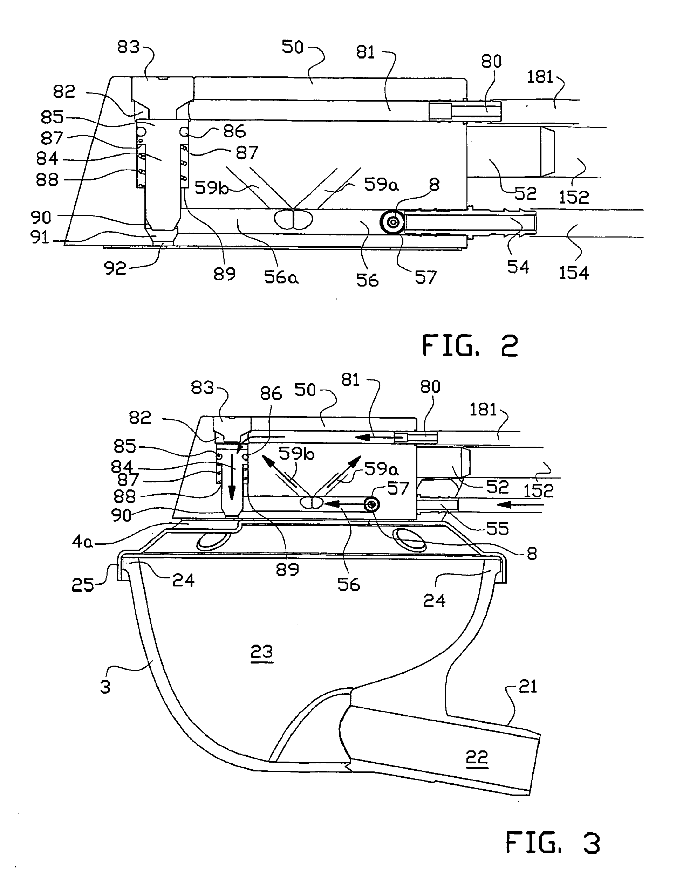

The upper part 50 has also been provided with a spout 55 for connection to a source of pressurised air with cleansing agent, such as iodine, via line 155, wherein the spout 55 internal via a transverse passage 57 in the upper part 50 is in connection with the passage 56 and thus with the ducts 59a-d and thus (also) with the spouts 53a-d. As shown in figure 2, the transverse passage 57 can be closed off by a valve 8, that is automatically operated with means that are not further shown in/at the milking claw.

The connections discussed up until now are known from the state of the art.

According to the invention the upper part 50 has furthermore been provided with a spout 80 for connection of a tube 181 leading to a source for pressurised air. In the upper part 50 the spout 80 is in connection with a passage 81 leading to a vertical chamber 82 that is closed off by means of 3 screw cap 83. Against the bottom side of the screw cap 83 the head 85 of a pin 84 supports, which pin has a bevelled lower end 90. The head 85 of the pin 84 has a sealing ring 86 against the wall of the chamber 82. More or less halfway the pin 84 the chamber has been provided with a shoulder 89 against which compression spring 88 supports, which at the other end supports against shoulder 87 of the head 85.

In this example the passage 56, after the branchings 59a-d, has been extended with a passage section 56a, which in use is horizontal or slopes down, and ends up in a lowermost area of a vertical chamber 82, which lowermost area downwardly changes into an inclined circumferential edge or valve seat 91, matching the bevelled lower end 90 of the pin 84. Via passage 92, the lowermost area of the chamber 82 is in connection with the atmosphere, via lowered section 4a of the lid 4.

When operational the milking claw device 1 of the preceding figures may be used as follows.

During milking the milking claw device 1 hangs below the cow's udder, and the milk tubes 105a-d are connected to the teats of the cow's udder via teat cups that are not shown. Via the lines 152 the tubes 151a-d are alternately put under pressure/at a vacuum, so that a milking motion is carried out in the teat cups. The milk discharged as a result thereof flows via the milk tubes 105a-d, the spouts 5a-d into the inside 23 of the milking claw housing 2, and is discharged via the spout 21, via the milk discharge line 121 to a central storage.

When the milking course with the cow in question can be stopped, the tube 152 is no longer activated. Pressurised air with a cleansing agent, such as iodine, is indeed discharged to the teats and optionally the inside of the teat cups via the tube 155, the spout 55, the passages 57, 56, ducts 59a-d, spouts 53a-d and tubes 153a-d.

Prior to supplying cleansing agent, such as iodine, via line 155, transverse passage 57, passage 56, etcetera, to the teat cups, the line 181 is activated, as a result of which pressurised air exerts pressure on passage 81, and on chamber 82, on the head 85 of the pin 84. As a result, counter the action of the compression spring 88, the pin 84 is urged down to have the lower end 90 engage into the seat 91 in a liquid-proof manner. In that way the passage 56a is closed off in an airtight/liquid-proof manner. Subsequently the cleansing agent including pressurised air is supplied via the tube 155, after opening the valve 8. The pressurised cleansing fluid goes to the teat cups via the passages 59a-d, the spouts 53a-d, the tubes 153a-d, and is discharged in the teat cups via a non-return valve having a threshold pressure of for instance 1.5 bars. This is schematically shown in figure 3 in which for reasons of clarity the spout 54/line 154 have been left out. Subsequently the valve 8 is closed off, and rinsing via tube 154, spout 54, passage 56, etcetera, can start.

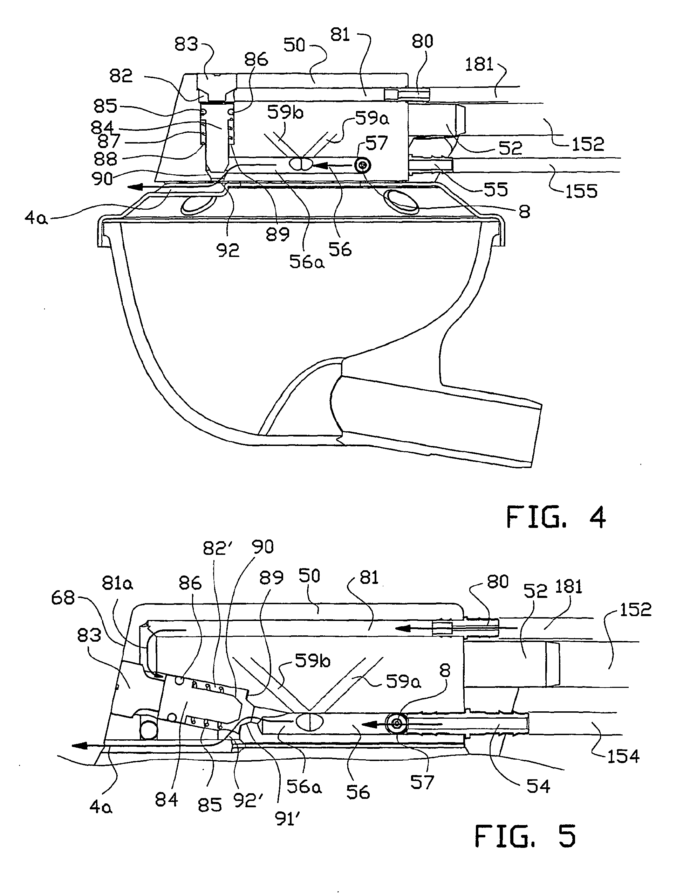

If the valve 8 for whatever reason is not (fully) closed, cleansing agent will continue to be supplied via the line 155. This will go on in all next process steps, until in a next milking course the supply of cleansing agent is wanted, and the valve 8 is operated to be opened again. For that period, in order to prevent cleansing agent from continuing to flow to the teat cups and/or the milk tubes 105a-d and continuously being discharged therein due to exceeding the threshold pressure, the pressure line 180 is deactivated, as a result of which the pin 84 under the influence of the compression spring 88 is able to move upwards, wherein the lower end 90 comes out of the seat 91, and a fluid connection is created between passage section 56a and passage 92. The cleansing agent originating from the line 155 can then flow freely away via passage 56, 56a, through the opening 92, via recess 4a, to the outside air, see figure 4.

Figure 5 shows an alternative interior for the upper part 50. The screw cap 83 is in that case attached in the side wall 68 of the upper part 50, which side wall slopes down diagonally. The horizontal passage 81 is connected via a vertical continuance 81 a to a chamber 82' oriented diagonally downward from the screw cap 83. The pin 84 with the bevelled lower end 90 rests against the bottom side of the screw cap 83. Because the screw cap 83 has been accommodated in the side wall 68 that slopes down, dirt will be less inclined to adhere to the screw can 83, as a result of which it remains accessible and passable at all times for instance to clean the pin 84.

Via passage 92', the lowermost area of the chamber 82' is in connection with the atmosphere, via the recessed section 4a of the lid 4. Via valve seat 91', the lowermost area of the chamber 82' is in connection with horizontal passage section 56a. Because of supply of pressurised air via the line 181 and the spout 80 the pin is urged downwards to have the lower end 90 engage in the seat 91'. In the position shown the cleansing agent originating from the line 1 55 is able to flow away through the passage 92', via recess 4a, to the outside air.

## Claims

1. Milking claw device (1) for a milking device, provided with a milking claw housing having a milk collection chamber (23) and a number of connections (5a-5d) for milk supply lines originating from, teat cups and a connection (21) for a milk discharge line, **characterized in that** the milking claw housing has been provided with first connections (53a-53d) for lines for supplying cleansing agent with pressurised fluid to the teat cups or milk lines connected thereto, with a second connection (54) for supplying cleansing agent with pressurised fluid to the first connections, as well as a passage system between the first and second connections, comprising a first passage (56) from the second connection, that branches into second passages (59a-59d) to the first connections, wherein the passage system has been provided with at least one third passage (56a), which forms a branch to a location of collection or discharge, wherein the passage system comprises a first valve (8) between the first and second connections, for in closed position preventing that the cleansing agent with pressurised fluid is led through wherein the third passage (56a) is situated downstream from the first valve (8).

2. Milking claw device according to claim 1, wherein the first valve has been arranged for closing off the first passage (56).

3. Milking claw device according to claim 1 or 2, wherein the third passage (56a) ends freely in the atmosphere.

4. Milking claw device according to claim 1, 2 or 3, wherein the second passages and the third passage connect to the first passage at a communal location, wherein the third passage (56a) preferably is in line with the first passage (56).

5. Milking claw device according to any one of the claims 1-4, provided with a second valve (84) for closing off the third passage.

6. Milking claw device according to claim 5, wherein the second valve is biassed to a position that keeps the third passage open.

7. Milking claw device according to claim 5 or 6, provided with a third connection (80) for a pressurised fluid to a fourth passage (81) for by means of pressurised fluid operating the second valve (84).

8. Milking claw device according to any one of the claims 5-7, wherein the second valve comprises a pin (84) with a free end for closing off the third passage, wherein the pin is movable between a closed-off position and an opening position in a direction transverse or diagonal to the first and/or third passage.

9. Milking claw device according to any one of the preceding claims, wherein the third passage (56a) has been placed for during use being horizontal or oriented so as to slope down in flow direction.

10. Milking claw device according to any one of the preceding claims, wherein the said connections and passages are housed in an upper part (50) of the milking claw housing.

11. Milking claw device according to claim 10, wherein the upper part is removably attached to the milking claw housing.

12. Milking claw device according to claim 10 or 11, when depending on claim 5, wherein the upper part (50) has an upper wall and a side wall (68) sloping down diagonally or transversely therefrom, wherein the second valve is accessible via a cap (83) in the downwardly sloping side wall.

13. Upper part (50) to be placed on a milking claw housing according to claim 11 or 12.

14. Milking claw device (1) according to any one of the preceding claims, provided with teat cups and milk tubes that form the connection between the first connections and the teat cups.

15. Milking installation (1) provided with a number of milking claw devices according to any one of the preceding claims and a central milk storage connected to the milk discharge lines thereof.

## Patentansprüche

1. Melkklauenvorrichtung (1) für eine Melkvorrichtung, versehen mit einem Melkklauengehäuse mit einer Milchsammelkammer (23) sowie einer Anzahl von Anschlüssen (5a - 5d) für Milchlieferleitungen, die von Zitzenbechern ausgehen, und einem Anschluss (21) für eine Milchausstoßleitung, **dadurch gekennzeichnet, dass** das Melkklauengehäuse versehen ist mit ersten Anschlüssen (53a - 53d) für Leitungen zur Zufuhr eines Reinigungsmittels mit einem druckbeaufschlagten Fluid zu den Zitzenbechern oder den daran angeschlossenen Milchleitungen, mit einem zweiten Anschluss (54) zur Zufuhr eines Reinigungsmittels mit einem druckbeaufschlagten Fluid zu den ersten Anschlüssen sowie mit einem Durchlasssystem zwischen den ersten und zweiten Anschlüssen, umfassend einen ersten Durchlass (56) ausgehend vom zweiten Anschluss, der sich in zweite Durchlässe (59a - 59d) hin zu den ersten Anschlüssen verzweigt, wobei das Durchlasssystem mit mindestens einem dritten Durchlass (56a) versehen ist, der eine Abzweigung zu einer Sammel- oder Ausstoßstelle bildet, wobei das Durchlasssystem ein erstes Ventil (8) zwischen den ersten und zweiten Anschlüssen umfasst, um in geschlossenem Zustand zu verhindern, dass das Reinigungsmittel mit dem druckbeaufschlagten Fluid durchströmt, wobei der dritte Durchlass (56a) stromabwärts vom ersten Ventil (8) angeordnet ist.

2. Melkklauenvorrichtung nach Anspruch 1, wobei das erste Ventil angeordnet ist, um den ersten Durchlass (56) abzusperren.

3. Melkklauenvorrichtung nach Anspruch 1 oder 2, wobei der dritte Durchlass (56a) frei in der Atmosphäre endet.

4. Melkklauenvorrichtung nach Anspruch 1, 2 oder 3, wobei die zweiten Durchlässe und der dritte Durchlass an einer gemeinsamen Stelle mit dem ersten Durchlass verbunden sind und wobei sich der dritte Durchlass (56a) vorzugsweise in einer Linie mit dem ersten Durchlass (56) befindet.

5. Melkklauenvorrichtung nach einem der Ansprüche 1 bis 4, versehen mit einem zweiten Ventil (84) zum Absperren des dritten Durchlasses.

6. Melkklauenvorrichtung nach Anspruch 5, wobei das zweite Ventil in Richtung einer Position vorgespannt wird, die den dritten Durchlass offen hält.

7. Melkklauenvorrichtung nach Anspruch 5 oder 6, versehen mit einem dritten Anschluss (80) für ein druckbeaufschlagtes Fluid zu einem vierten Durchlass (81), um mittels des druckbeaufschlagten Fluids das zweite Ventil (84) zu betätigen.

8. Melkklauenvorrichtung nach einem der Ansprüche 5 bis 7, wobei das zweite Ventil einen Stift (84) mit einem freien Ende umfasst, um den dritten Durchlass abzusperren, wobei der Stift zwischen einer Absperrposition und einer Öffnungsposition in einer Richtung quer oder diagonal zum ersten und/oder dritten Durchlass beweglich ist.

9. Melkklauenvorrichtung nach einem der vorhergehenden Ansprüche, wobei der dritte Durchlass (56a) derart angeordnet ist, dass er während der Verwendung horizontal oder derart ausgerichtet ist, dass er in Strömungsrichtung nach unten geneigt ist.

10. Meikklauenvorrichtung nach einem der vorhergehenden Ansprüche, wobei die Anschlüsse und Durchlässe in einem oberen Teil (50) des Meikklauengehäuses untergebracht sind.

11. Melkklauenvorrichtung nach Anspruch 10, wobei der obere Teil abnehmbar an dem Melkklauengehäuse angebracht ist.

12. Melkklauenvorrichtung nach Anspruch 10 oder 11, wenn abhängig von Anspruch 5, wobei der obere Teil (50) eine obere Wand und eine Seitenwand (68) umfasst, die sich diagonal oder quer von dieser nach unten neigt, wobei das zweite Ventil über einen Deckel (83) in der nach unten geneigten Seitenwand zugänglich ist.

13. Oberer Teil (50), der an einem Melkklauengehäuse nach Anspruch 11 oder 12 anzuordnen ist.

14. Melkklauenvorrichtung (1) nach einem der vorhergehenden Ansprüche, versehen mit Zitzenbechern und Milchröhren, die die Verbindung zwischen den ersten Anschlüssen und den Zitzenbechern bilden.

15. Melkanlage (1), versehen mit einer Anzahl von Melkklauenvorrichtungen nach einem der vorhergehenden Ansprüche und einem zentralen Milchspeicher, der mit ihren Milchausstoßleitungen verbunden ist.

## Revendications

1. Dispositif de griffe de traite (1) pour dispositif de traite, pourvu d'un logement de griffe de traite comportant une chambre de collecte de lait (23) et un nombre de raccords (5a à 5d) pour conduites d'alimentation en lait partant des gobelets trayeurs et un raccord (21) pour une conduite de décharge de lait, **caractérisé en ce que** le logement de griffe de traite a été doté de premiers raccords (53a à 53d) pour des conduites destinées à distribuer un agent de nettoyage avec un fluide pressurisé jusqu'aux gobelets trayeurs ou des conduites de lait qui y sont reliées, d'un deuxième raccord (54) pour distribuer un agent de nettoyage avec un fluide pressurisé jusqu'aux premiers raccords, ainsi que d'un système de passage entre les premiers et deuxième raccords, comprenant un premier passage (56) à partir du deuxième raccord, qui se ramifie en deuxièmes passages (59a à 59d) jusqu'aux premiers raccords, où le système de passage a été doté d'au moins un troisième passage (56a), qui forme une ramification jusqu'à un emplacement de collecte ou de décharge, où le système de passage comprend une première valve (8) entre les premiers et deuxième raccords, destinée, dans la position fermée, à empêcher le passage de l'agent de nettoyage avec le fluide pressurisé, où le troisième passage (56a) est situé en aval de la première valve (8).

2. Dispositif de griffe de traite selon la revendication 1, dans lequel la première valve a été agencée pour fermer le premier passage (56).

3. Dispositif de griffe de traite selon la revendication 1 ou 2, dans lequel le troisième passage (56a) se termine librement dans l'atmosphère.

4. Dispositif de griffe de traite selon la revendication 1, 2 ou 3, dans lequel les deuxièmes passages et le troisième passage se raccordent au premier passage en un emplacement commun, où le troisième passage (56a) est, de préférence, aligné avec le premier passage (56).

5. Dispositif de griffe de traite selon l'une quelconque des revendications 1 à 4, pourvu d'une deuxième valve (84) destinée à fermer le troisième passage.

6. Dispositif de griffe de traite selon la revendication 5, dans lequel la deuxième valve est sollicitée vers une position qui garde ouvert le troisième passage.

7. Dispositif de griffe de traite selon la revendication 5 ou 6, pourvu d'un troisième raccord (80) pour fluide pressurisé jusqu'à un quatrième passage (81) pour, au moyen du fluide pressurisé, actionner la deuxième valve (84).

8. Dispositif de griffe de traite selon l'une quelconque des revendications 5 à 7, dans lequel la deuxième valve comprend une goupille (84) ayant une extrémité libre pour fermer le troisième passage, où la goupille est mobile entre une position fermée et une position d'ouverture dans une direction transversale ou en diagonale par rapport au premier et/ou troisième passage.

9. Dispositif de griffe de traite selon l'une quelconque des revendications précédentes, dans lequel le troisième passage (56a) a été placé de façon à, durant l'utilisation, être horizontal ou orienté de manière à s'incliner dans la direction d'écoulement.

10. Dispositif de griffe de traite selon l'une quelconque des revendications précédentes, dans lequel lesdits raccords et passages sont logés dans une partie supérieure (50) du logement de griffe de traite.

11. Dispositif de griffe de traite selon la revendication 10, dans lequel la partie supérieure est fixée de manière amovible au logement de griffe de traite.

12. Dispositif de griffe de traite selon la revendication 10 ou 11, sous réserve de rattachement à la revendication 5, dans lequel la partie supérieure (50) comporte une paroi supérieure et une paroi latérale (68) s'inclinant vers le bas en diagonale ou transversalement depuis elle, où la deuxième valve est accessible via un bouchon (83) dans la paroi latérale inclinée vers le bas.

13. Partie supérieure (50) destinée à être placée sur un logement de griffe de traite selon la revendication 11 ou 12.

14. Dispositif de griffe de traite (1) selon l'une quelconque des revendications précédentes, pourvu de gobelets trayeurs et de conduites de lait qui forment la connexion entre les premiers raccords et les gobelets trayeurs.

15. Installation de traite (1) pourvue d'un nombre de dispositifs de griffes de traite selon l'une quelconque des revendications précédentes et d'une unité de stockage de lait centrale reliée à leurs conduites de décharges de lait.
